# EUROPEAN PATENT APPLICATION

(11) **EP 4 588 601 A1**
(43) Date of publication of application: **23.07.2025**
(21) Application number: 23912173.4
(22) Date of filing: 26.12.2023
(51) Int. Cl.: B23K 9/23, C23C 2/06

(54) **WELDED JOINT**

(30) Priority: 26.12.2022 JP 2022208665
(71) Applicant: NIPPON STEEL CORPORATION, Chiyoda-ku Tokyo 100-8071 (JP)
(72) Inventor: MITSUNOBU, Takuya, Tokyo 100-8071 (JP); URANAKA, Masaaki, Tokyo 100-8071 (JP); MATSUBA, Masahiro, Tokyo 100-8071 (JP); NISHIKADO, Minae, Tokyo 100-8071 (JP)
(74) Representative: Vossius & Partner Patentanwälte Rechtsanwälte mbB
(86) International application number: PCT/JP2023/046724
(87) International publication number: WO 2024/143395

(57) **Abstract**

To further improve corrosion resistance in a near-toe zone.

A welded joint according to the present invention includes a first steel sheet and a second steel sheet connected to a weld bead part whose extension direction is set as a long side in plan view, wherein: the first and second steel sheets each have a heat-affected zone and a non-heat-affected zone; in the first and second steel sheet, at least either the first steel sheet or the second steel sheet has a plating layer having a predetermined chemical composition in the non-heat-affected zone. When a cross section is observed by a scanning electron microscope, regarding a region, with a specific position near a toe set as a starting point, in a range from the starting point to 100 µm, an average area ratio of an Fe-Al metal structure is 0 to 95%, an average area ratio of a Mg-Zn metal structure is 5 to 100%, and an average area ratio of an η-Zn phase is 3 area% or less in the plating layer.

## Description

### [Technical Field]

The present invention relates to a welded joint.

### [Background Art]

Automobile members such as automobile underbody members and various construction material members are often manufactured using welded joints made by welding a plurality of steel materials. These automobile members and construction material members are used under the condition of being exposed to various environments, and thus the manufactured welded joints are desired to have excellent corrosion resistance. Therefore, various zinc-based plated steel sheets, such as alloyed hot-dip galvanized steel sheets, are used as materials for such welded joints.

Here is the following specific problem when galvanized steel sheets are welded to manufacture welded joints. A decrease in mechanical properties of the welded joint, resulting from blowholes formed as a result of Zn evaporation during plating at the time of welding, near a "toe" defined in JIS Z3001 (2018) is a concern. Moreover, the Zn evaporation during plating damages a sacrificial corrosion protection layer, and thus corrosion resistance also decreases.

To solve the problem of the blowhole formation as described above, various proposals have been made in the past. For example, in Patent Document 1 below, a plated steel material is proposed, the plated steel material including: a steel sheet; and a plating layer disposed on a surface of the steel sheet and including a Zn-Al-Mg alloy layer, wherein in a cross section of the Zn-Al-Mg alloy layer, an area fraction of a MnZn₂ phase is 45 to 75%, a total area fraction of a MgZn₂ phase and an Al phase is 70% or more, and an area fraction of a Zn-Al-MgZn₂ ternary eutectic structure is 0 to 5%, and the plating layer has a predetermined chemical composition.

### [Prior Art Document]

### [Patent Document]

Patent Document 1: International Publication Pamphlet No. WO 2018/139620

### [Disclosure of the Invention]

### [Problems to Be Solved by the Invention]

Here, the problem of the blowhole formation can be solved by using the plated steel material proposed in Patent Document 1 above. However, as a result of being intensively studied by the present inventors, the technique proposed in Patent Document 1 above still has room for improvement. Further improvement is desired with regard to corrosion resistance of a near-toe zone in the welded joint using the galvanized steel sheet as the material.

Thus, the present invention was made in consideration of the above problem, and an object of the present invention is to provide a welded joint capable of further improving corrosion resistance in a near-toe zone.

### [Means for Solving the Problems]

To solve the above problem, as a result of being intensively studied by the present inventors, they have conceived a mechanism of forming a Mg-Zn phase advantageous to corrosion protection of base iron in a plating layer of a near-toe zone by promoting formation of an Fe-Al phase advantageous to the corrosion protection of the base iron during welding. It is expected that the plating layer present in the near-toe zone includes the Mg-Zn phase, and thereby corrosion resistance of the base iron in the near-toe zone further improves.

Based on such findings, as a result of being further studied by the present inventors, they have found that the corrosion resistance in the near-toe zone can be improved by improving a plating structure in the near-toe zone of a welded joint.

The gist of the present invention completed based on such findings is as follows.

(1) A welded joint includes a first steel sheet and a second steel sheet connected to a weld bead part whose extension direction is set as a long side in plan view, wherein: the first steel sheet and the second steel sheet each have a heat-affected zone located around the weld bead part, and a non-heat-affected zone not affected by heat due to welding; at least either the first steel sheet or the second steel sheet has a base iron and a plating layer on the base iron in the non-heat-affected zone; the plating layer is a plating layer having a chemical composition containing, by mass%, Al: 30. 00 to 70.00%, Mg: 7.00 to 20.00%, and Fe: 0.01 to 15.00%, and selectively containing one kind or two or more kinds of elements selected from a group consisting of an element group A, an element group B, an element group C, an element group D, an element group E, an element group F, and an element group G described below, with the balance composed of Zn of 5.00 mass% or more and impurities; and when viewed from a toe defined in JIS Z3001 (2018) toward a direction being orthogonal to the extension direction and separating from the toe, the toe, a region where the heat-affected zone or the base iron is exposed, and a region having the plating layer are configured in this order, and an average area ratio of an Fe-Al metal structure is 0 to 95%, an average area ratio of a Mg-Zn metal structure is 5 to 100%, and an average area ratio of an η-Zn phase is 3 area% or less in the plating layer when a cross section cut in a direction orthogonal to the extension direction is observed by a scanning electron microscope regarding a region, with an end portion of the plating layer closest to the toe set as a starting point, in a range from the starting point to 100 µm.
   [Element group A]: one kind or two kinds selected from a group consisting of Si: more than 0% to 10.00% or less, and Ca: more than 0% to 4.00% or less
   [Element group B]: one kind or two or more kinds selected from a group consisting of Sb: more than 0% to 0.5000% or less, Pb: more than 0% to 0.5000% or less, and Sr: more than 0% to 0.5000% or less
   [Element group C]: one kind or two or more kinds selected from a group consisting of Cu: more than 0% to 1.0000% or less, Ti: more than 0% to 1.0000% or less, Cr: more than 0% to 1.0000% or less, Nb: more than 0% to 1.0000% or less, Ni: more than 0% to 1.0000% or less, Mn: more than 0% to 1.0000% or less, Mo: more than 0% to 1.0000% or less, Co: more than 0% to 1.0000% or less, and V: more than 0% to 1.0000% or less
   [Element group D]: one kind or two or more kinds selected from a group consisting of Sn: more than 0% to 1.0000% or less, In: more than 0% to 1.0000% or less, and Bi: more than 0% to 1.0000% or less
   [Element group E]: one kind or two or more kinds selected from a group consisting of Zr: more than 0% to 1.0000% or less, Ag: more than 0% to 1.0000% or less, and Li: more than 0% to 1.0000% or less
   [Element group F]: one kind or two or more kinds selected from a group consisting of La: more than 0% to 0.5000% or less, Ce: more than 0% to 0.5000% or less, and Y: more than 0% to 0.5000% or less
   [Element group G]: B: more than 0% to 0.5000% or less
(2) The welded joint according to (1), having a chemical composition containing the element group A.
(3) The welded joint according to (1), having a chemical composition containing the element group B.
(4) The welded joint according to (1), having a chemical composition containing the element group C.
(5) The welded joint according to (1), having a chemical composition containing the element group D.
(6) The welded joint according to (1), having a chemical composition containing the element group E.
(7) The welded joint according to (1), having a chemical composition containing the element group F.
(8) The welded joint according to (1), having a chemical composition containing the element group G.
(9) The welded joint according to any one of (1) to (8), wherein the plating layer contains Mg: 9.00 to 15.00 mass%, and contains Ca: 0.05 to 4.00 mass% as the element group A.
(10) The welded joint according to any one of (1) to (8), wherein when a cross section cut in the direction orthogonal to the extension direction is observed by the scanning electron microscope regarding the region in the range from the starting point to 100 µm, an η-Zn phase is not contained in the plating layer.
(11) The welded joint according to (9), wherein a cross section cut in the direction orthogonal to the extension direction is observed by the scanning electron microscope regarding the region in the range from the starting point to 100 µm, an η-Zn phase is not contained in the plating layer.
(12) The welded joint according to any one of (1) to (8), wherein when a cross section cut in the direction orthogonal to the extension direction is observed by the scanning electron microscope regarding the region in the range from the starting point to 100 µm, a Mg phase is further contained in at least a part of the plating layer.
(13) The welded joint according to (9), wherein when a cross section cut in the direction orthogonal to the extension direction is observed by the scanning electron microscope regarding the region in the range from the starting point to 100 µm, a Mg phase is further contained in at least a part of the plating layer.
(14) The welded joint according to (10), wherein when a cross section cut in the direction orthogonal to the extension direction is observed by the scanning electron microscope regarding the region in the range from the starting point to 100 µm, a Mg phase is further contained in at least a part of the plating layer.
(15) The welded joint according to (11), wherein when a cross section cut in the direction orthogonal to the extension direction is observed by the scanning electron microscope regarding the region in the range from the starting point to 100 µm, a Mg phase is further contained in at least a part of the plating layer.
(16) The welded joint according to (1), wherein an average area ratio of the Mg-Zn metal structure is 30 to 80%.

### [Effect of the Invention]

According to the present invention as explained above, it becomes possible to further improve corrosion resistance in a near-toe zone.

### [Brief Description of the Drawings]

[FIG. 1A] FIG. 1A is an explanatory view schematically illustrating an example of a structure of a welded joint according to an embodiment of the present invention.
[FIG. 1B] FIG. 1B is an explanatory view schematically illustrating an example of a structure of a welded joint according to another embodiment.
[FIG. 1C] FIG. 1C is an explanatory view schematically illustrating an example of a structure of a welded joint according to the other embodiment.
[FIG. 2] FIG. 2 is an explanatory view for explaining the welded joint according to the embodiment illustrated in FIG. 1A.
[FIG. 3] FIG. 3 is an explanatory view for explaining the welded joint according to the embodiment.
[FIG. 4] FIG. 4 is an explanatory view for explaining the welded joint according to the embodiment.

### [Embodiments for Carrying out the Invention]

A preferred embodiment of the present invention will be explained in detail with reference to the accompanying drawings below. Note that in this specification and the drawings, components that have substantially the same functional configuration will be omitted from the duplicated explanation by applying the same codes.

### (Regarding welded joint)

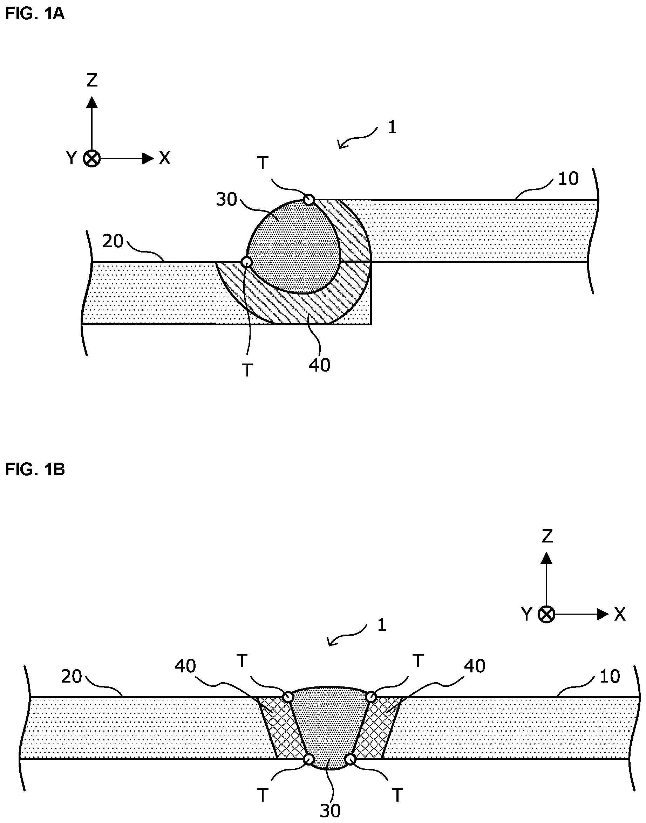

First, an overall configuration of a welded joint according to an embodiment of the present invention will be explained with reference to FIG. 1A. FIG. 1A is an explanatory view schematically illustrating an example of a structure of a welded joint according to this embodiment.

Note that in the following, for convenience, explanations shall be appropriately performed using a coordinate system as illustrated in FIG. 1A. In FIG. 1A, a welded joint in which two steel sheets are welded by arc welding is taken as an example to be illustrated.

FIG. 1A schematically illustrates the overall configuration of a welded joint obtained by lap fillet welding of a first steel sheet and a second steel sheet by arc welding or laser welding, and illustrates a cross section of the welded joint perpendicular to an extension direction of a weld bead part. As schematically illustrated in FIG. 1A, a welded joint 1 according to this embodiment has a first steel sheet 10, a second steel sheet 20, and a weld bead part 30. Further, a heat-affected zone 40 is formed near the weld bead part 30 in the first steel sheet 10 and the second steel sheet 20. As illustrated in FIG. 1A, in the following, a normal direction with respect to a surface of the second steel sheet 20 is set as a Z-axis direction, the extension direction of the weld bead part 30 is set as a Y-axis direction, and a direction orthogonal to the Z-axis direction and the Y-axis direction is set as an X-axis direction.

Here, in the following, a case of using a zinc-based plated steel sheet having a plating layer as described in detail below as a material of the first steel sheet 10 and the second steel sheet 20 constituting the welded joint 1 is taken as an example to be explained.

Further, the weld bead part 30 is a section formed by arc welding or laser welding, and interdiffusion of constituent elements occurs between a welding wire which is used as necessary during welding and the steel sheet as the material (hereinafter, referred to as a "material steel sheet".). The weld bead part 30 is formed by oxidation of such diffused elements. Therefore, in FIG. 1A, a joint interface between the weld bead part 30 and the first steel sheet 10 or the second steel sheet 20 is illustrated as a smooth curve and a straight line for convenience of illustration, but arc plasma or the like vibrates molten metal during welding, thereby causing an actual joint interface to have a complex curved surface. Further, such a weld bead part 30 extends along the Y-axis direction in the figure, and such a weld bead part 30 joins the first steel sheet 10 and the second steel sheet 20.

Note that components constituting such a weld bead part 30 vary depending on the type of the welding wire to be used, a chemical composition of the material steel sheet, or the like, thus making it difficult to unambiguously determine such components as to cover all possibilities. However, such a weld bead part 30 is generally composed mainly of oxides of "easily oxidizable elements" (a content of the oxides of the "easily oxidizable elements" is 50 mass% or more) among the various elements constituting the plating layer present in an overlapped part (lap) of the material steel sheets. As such easily oxidizable elements, for example, Al, Mg, Si, and the like can be cited.

Further, when the weld bead part 30 in the welded joint 1 is identified, an etching process, using an etching solution, of a cross section of the welded joint 1 including the weld bead part 30, the heat-affected zone 40, and a non-heat-affected zone allows easy visualization. For example, as the etching solution, nital (composition: ethanol of 95%, a sulfuric acid of 5%), an etching solution in which sodium dodecylbenzenesulfonate of 60 g, a picric acid of 36 g, ethanol of 60 cc, and a household detergent (for example, a generally used one such as a dishwashing detergent) of 60 cc are mixed with respect to water of 2400 cc, or the like can be used.

Note that the oxides formed during welding are broadly classified into two kinds of scale and slag. The scale which is the oxide formed on a surface of the weld bead part 30 during welding contains Fe of 50% or more by mass% in excluding oxygen, and the balance is composed of easily oxidizable elements and impurities. Further, the slag contains easily oxidizable elements of 50 % or more by mass% in excluding oxygen, and the balance is composed of Fe of less than 50 mass% and impurities. Here, as concrete examples of the "easily oxidizable elements", Ca, In, Bi, Cr, Zr, Li, La, Ce, Sr, Y, Si, Mn, Al, and Ti can be cited.

Note that the above scale and slag can be easily distinguished by performing a component analysis with a scanning electron microscope (SEM) provided with an electron probe micro analyzer (EPMA). In more detail, a cross section of a section appearing to be the scale or the slag is subjected to a point analysis with the EPMA, and judged according to which of the contents of the above "easily oxidizable elements" and Fe is 50 mass% or more. As long as the content of Fe is 50 mass% or more, the focused section can be judged the slag, and as long as the content of the "easily oxidizable elements" is 50 mass% or more, the focused section can be judged the scale.

Here, in JIS Z3001 (2018), an "intersection of a surface of a base iron and a surface of a weld bead" is defined as a "toe". In the welded joint 1 as illustrated in FIG. 1A, an intersection of a surface of the weld bead part 30, and, a surface of the base iron or the heat-affected zone of the first steel sheet 10 or the second steel sheet 20 corresponds to such a "toe". The welded joint 1 according to this embodiment focuses on corrosion resistance in a near portion of such a toe T.

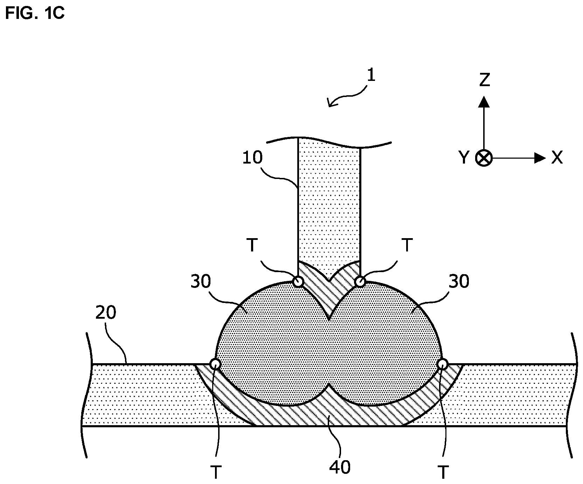

Such a "toe T" is defined not only for a lap fillet welded joint as in FIG. 1A, similarly defined but also for a butt welded joint as illustrated in FIG. 1B, a T-welded joint as illustrated in FIG. 1C, and the like.

Further, a heat input by arc welding or laser welding is normally performed from a certain one side of the welded joint 1 in general, the weld bead part 30 is exposed on a surface of the steel sheet serving as a base metal on a heat input side of arc welding or laser welding, and in a further direction in which the heat input by arc welding propagates, a width of a weld bead becomes smaller. Thus, a heat input direction during arc welding or during laser welding can be identified by focusing on the presence/absence of the weld bead part 30 exposed on the surface and a shape which the weld bead exhibits. Note that the above form in which "the weld bead part 30 is exposed" includes a form in which a scale formed on the weld bead part 30 is exposed.

Further, in this embodiment, in such a joint at which the two steel sheets are at least partly overlapped as the lap fillet welded joint illustrated in FIG. 1A and the T-welded joint illustrated in FIG. 1C, the steel sheet located on the heat input side of arc welding or laser welding as described above is set as the first steel sheet 10, and the steel sheet located on an opposite side to the heat input side of arc welding or laser welding is set as the second steel sheet 20.

As schematically illustrated in FIG. 1A to FIG. 1C, the heat-affected zone 40 is formed around the weld bead part 30. The heat-affected zone 40 is caused by changing a quality of a metal structure of the material steel sheet as a result of the heat input into the material steel sheet by arc welding or laser welding. A size of such a heat-affected zone 40 depends on a heat input amount during arc welding or laser welding, and in general, the higher the heat input amount is, the larger the size of the heat-affected zone 40 also becomes. Further, a section corresponding to the heat-affected zone 40 can be easily distinguished by changing the quality of the metal structure of the material steel sheet because it is different in a state (appearances) when visually observed from a section free from changing the quality of the material steel sheet.

### <Regarding non-heat-affected zone>

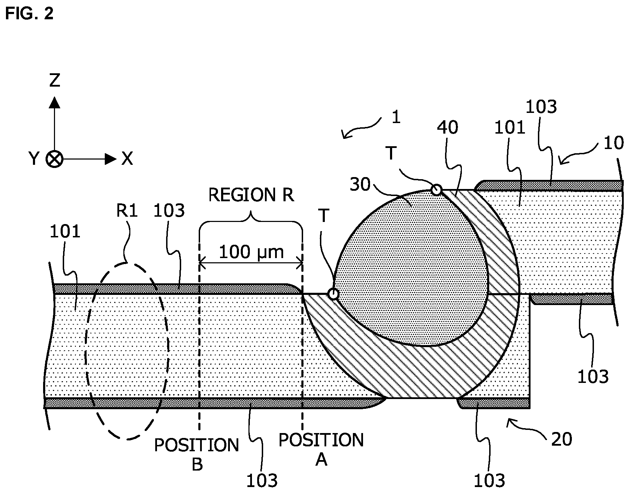

Subsequently, a configuration of a section, which is not affected by heat due to the welding, of the welded joint 1 according to this embodiment is explained in detail with reference to FIG. 2. FIG. 2 is a view schematically illustrating a cross section of the welded joint 1 perpendicular to the extension direction of the weld bead zone 30, and illustrates an X-Z cross section when the welded joint 1 is cut in the Z-axis direction.

In the following explanation, the section, which is not affected by heat due to welding, of the welded joint 1 (in other words, the section which is not the weld bead part 30 and the heat-affected zone 40) is referred to as a "non-heat-affected zone". In the welded joint 1 as illustrated in FIG. 2, the non-heat-affected zone can be considered to be present in a direction being orthogonal to the extension direction of the weld bead part 30 (the Y-axis direction in FIG. 2) and separating from the toe T and the heat-affected zone (the X-axis direction in FIG. 2) with a position where a plating layer 103 to be described later is present set as a starting point near the toe T. For example, a region R1 surrounded by dotted lines in FIG. 2 is present in a position separate from the toe T to some extent (for example, a position 4 to 5 mm or more separate from the toe T toward an opposite side to the weld bead part 30 in the X-axis direction), so that it can be obviously considered the non-heat-affected zone. On the other hand, in a region to some extent, which is not the weld bead part 30 and the heat-affected zone 40 but is located near the toe T, such corrosion resistance as mentioned earlier (in particular, corrosion resistance of the base iron) is desired.

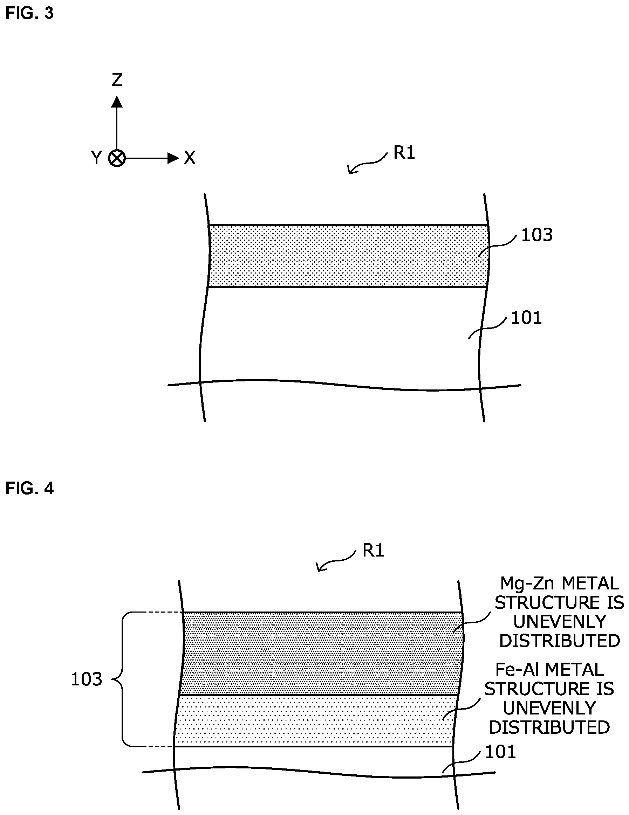

FIG. 3 is a view schematically illustrating a part of a cross section parallel to a sheet thickness direction in the non-heat-affected zone R1. The non-heat-affected zone R1 in at least either the first steel sheet 10 or the second steel sheet 20 has a base iron 101, and the plating layer 103 located on a surface of the base iron 101, as schematically illustrated in FIG. 3. Note that in the welded joint 1 according to this embodiment, the plating layer 103 as described above may be present on one surface of the base iron 101, but they are more preferably present on both surfaces of the base iron 101.

In consideration of a cross-sectional structure of the welded joint 1 in the non-heat-affected zone as illustrated in FIG. 3, in this embodiment, the region desired for the corrosion resistance of the base iron is configured in order of the toe, a region where the heat-affected zone or the base iron is exposed (also referred to as a region having no plating layer.), and a region having the plating layer toward the direction separating from the weld bead part in the X-axis direction, near the toe T. In such a configuration, an end portion of the plating layer closest to the toe T in the X-direction in cross-sectional view is handled as the starting point.

The region as described above will be explained in detail again below, and first, the base iron 101 and the plating layer 103 which the non-heat-affected zone has will be explained in detail.

### <<Regarding base iron 101>>

In the welded joint 1 according to this embodiment, dimensions, components, a structure, and mechanical properties of the base iron 101 corresponding to a base material of the material steel sheet are not particularly limited. For example, various steel sheets can be used as the base iron 101 depending on mechanical strength (for example, tensile strength) required for the welded joint 1, or the like. As such steel sheets, for example, there can be cited various kinds of Al-killed steel, ultralow carbon steel containing Ti, Nb, and the like, high-strength steel further containing strengthening elements such as P, Si, and Mn in the ultralow carbon steel, various steel sheets containing other various components (Cr, N, Cu, B, Ni, Mg, Ca, V, Co, Zn, As, Y, Zr, Mo, Sn, Sb, Ta, W, Pb, Bi, REM and the like), and the like.

In the high-strength steel as described above, for example, using the high-strength steel having a tensile strength of 780 MPa or more (so-called high-strength steel with 780 MPa grade or more) allows robustness as the welded joint 1 to be further improved, which is thus particularly preferable. Here, the tensile strength of the base iron 101 can be measured by a well-known method. As an example, a specimen with a size allowed to be collected from the welded joint 1 among specimens defined in JIS Z 2241 (2011) only needs to be produced from a section corresponding to the base iron 101 of the non-heat-affected zone of the welded joint 1 intended for the measurement of the tensile strength, to measure the tensile strength by the method defined in JIS Z 2241 (2011) with respect to the obtained specimen.

Further, a thickness of the base iron 101 is not particularly limited, but set appropriately according to the mechanical strength and the like required for the welded joint 1.

### <<Regarding plating layer 103>>

The plating layer 103 is provided on, for example, the base iron 101 in the non-heat-affected zone R1 as schematically illustrated in FIG. 3. Such a plating layer 103 is derived from a plating layer which a plated steel sheet as a material of the welded joint 1 has.

First, a chemical composition of such a plating layer 103 will be explained in detail below.

### ◊ Regarding chemical composition of plating layer 103

The chemical composition of the plating layer 103 according to this embodiment has, according to one aspect, a chemical composition containing, by mass%, Al: 30.00 to 70.00%, Mg: 7.00 to 20.00%, and Fe: 0.01 to 15.00%, with the balance composed of Zn of 5.0000 mass% or more and impurities. That is, in the chemical composition of the plating layer 103 according to this embodiment, contents of Al, Mg, and Fe are in the above ranges and a total of these contents is 95.0000 mass% or less, and, the balance is Zn of 5.0000 mass% or more and impurities.

Further, the chemical composition of the plating layer 103 according to this embodiment has, according to the other aspect, a chemical composition containing, by mass%, Al: 30.00 to 70.00%, Mg: 7.00 to 20.00%, and Fe: 0.01 to 15.00%, and further containing one kind or two or more kinds selected from a group consisting of an element group A, an element group B, an element group C, an element group D, an element group E, an element group F, and an element group G described below, with the balance composed of Zn of 5.0000 mass% or more and impurities. That is, in the chemical composition of the plating layer 103 according to this embodiment, contents of Al, Mg, and Fe are in the above ranges and a total of these contents of Al, Mg, Fe, and the element group A to element group G is 95.0000 mass% or less, and the balance is Zn of 5.0000 mass% or more and impurities.

[Element group A]: one kind or two kinds selected from a group consisting of Si: more than 0% to 10.0000% or less, and Ca: more than 0% to 4.0000% or less
[Element group B]: one kind or two or more kinds selected from a group consisting of Sb: more than 0% to 0.5000% or less, Pb: more than 0% to 0.5000% or less, and Sr: more than 0% to 0.5000% or less
[Element group C]: one kind or two or more kinds selected from a group consisting of Cu: more than 0% to 1.0000% or less, Ti: more than 0% to 1.0000% or less, Cr: more than 0% to 1.0000% or less, Nb: more than 0% to 1.0000% or less, Ni: more than 0% to 1.0000% or less, Mn: more than 0% to 1.0000% or less, Mo: more than 0% to 1.0000% or less, Co: more than 0% to 1.0000% or less, and V: more than 0% to 1.0000% or less
[Element group D]: one kind or two or more kinds selected from a group consisting of Sn: more than 0% to 1.0000% or less, In: more than 0% to 1.0000% or less, and Bi: more than 0% to 1.0000% or less
[Element group E]: one kind or two or more kinds selected from a group consisting of Zr: more than 0% to 1.0000% or less, Ag: more than 0% to 1.0000% or less, and Li: more than 0% to 1.0000% or less
[Element group F]: one kind or two or more kinds selected from a group consisting of La: more than 0% to 0.5000% or less, Ce: more than 0% to 0.5000% or less, and Y: more than 0% to 0.5000% or less
[Element group G]: B: more than 0% to 0.5000% or less

Thus, the plating layer 103 according to this embodiment is a plating layer having the chemical composition containing, by mass%, Al: 30.00 to 70.00%, Mg: 7.00 to 20.00%, and Fe: 0.01 to 15.00%, and selectively containing one kind or two or more kinds of elements selected from the group consisting of the element group A, the element group B, the element group C, the element group D, the element group E, the element group F, and the element group G, with the balance composed of Zn of 5.0000 mass% or more and impurities.

### [Al: 30.00 to 70.00 mass%]

Al is an element necessary to constitute a main metal structure (Zn-Al-Mg-based metal structure) of the plating layer 103 according to this embodiment, and is contained over a certain level to ensure corrosion resistance of a section serving as the heat-affected zone and corrosion resistance of a section serving as the non-heat-affected zone as the plated steel sheet. When an Al content in the plating layer 103 is less than 30.00 mass%, the corrosion resistance of the sections serving as the heat-affected zone and the non-heat-affected zone as described above cannot be ensured. This is because when the Al content is insufficient, it becomes impossible to control an alloying reaction of the plating layer and the base iron during welding, so that a formation amount of an η-Zn phase likely to corrode increases. Therefore, in the plating layer 103 according to this embodiment, the Al content is 30.00 mass% or more. The Al content is preferably 34.00 mass% or more, and more preferably 38.00 mass% or more. The Al content is in the range as described above, thereby allowing the corrosion resistance as the plated steel sheet to be ensured

On the other hand, when the Al content in the plating layer 103 exceeds 70.00 mass%, an excessive increase in an Al phase which functions as a cathode when placed in a corrosive environment causes a relative decrease in a formation amount of a Mg-Zn phase excellent in corrosion resistance, thereby decreasing a sacrificial corrosion protection property to make corrosion of the base iron likely to proceed, and thus the corrosion resistance of the plated steel sheet cannot be ensured. Therefore, in the plating layer 103 according to this embodiment, the Al content is 70.00 mass% or less. The Al content is preferably 60.00 mass% or less, and more preferably 50.00 mass% or less.

### [Mg: 7.00 to 20.00 mass%]

Mg is a corrosion resistance improving element and an element necessary to constitute the main metal structure (Zn-Al-Mg-based metal structure) of the plating layer 103 according to this embodiment, and is contained over a certain level to ensure the corrosion resistance of the section serving as the heat-affected zone and the corrosion resistance of the section serving as the non-heat-affected zone as the plated steel sheet. Therefore, in the plating layer 103 according to this embodiment, in order to obtain sufficient corrosion resistance also in the welded part, a Mg content is 7.00 mass% or more. The Mg content is preferably 9.00 mass% or more, and more preferably 10.00 mass% or more. The Mg content is in the range as described above, thereby allowing the corrosion resistance as the plated steel sheet to be ensured.

On the other hand, when the Mg content in the plating layer 103 exceeds 20.00 mass%, anodic dissolution of the plating layer is likely to proceed when placed in the corrosive environment, and thus the corrosion resistance as the plated steel sheet cannot be ensured. Therefore, in the plating layer 103 according to this embodiment, the Mg content is 20.00 mass% or less. The Mg content is preferably 15.00 mass% or less, and more preferably 13.00 mass% or less. The Mg content is in the range as described above, thereby allowing the corrosion resistance as the plated steel sheet to be ensured.

### [Fe: 0.01 to 15.00 mass%]

Elements constituting the base iron 101 sometimes mix from the base iron 101 into the plating layer 103. In particular, in a hot-dip plating method, the elements constituting the base iron 101 easily mix into the plating layer 103 due to interdiffusion of the elements by a solid-liquid reaction between the base iron 101 and the plating layer 103. Due to such mixing of the elements, a certain amount of Fe is contained in the plating layer 103, and the content is generally 0.01 mass% or more. When the above interdiffusion is promoted, adhesiveness between the base iron 101 and the plating layer 103 improves. From the viewpoint of the improvement in the adhesiveness between the base iron 101 and the plating layer 103, an Fe content in the plating layer 103 is preferably 0.20 mass% or more.

Further, Fe may be intentionally added into a plating bath used in manufacturing the plating layer 103 in a range where the effect of the present invention is not impaired. However, when the Fe content in the plating bath increases, high melting point intermetallic compounds of Fe and Al are formed in the plating bath, and such high melting point intermetallic compounds adhere to the plating layer 103 as dross to tend to significantly degrade an appearance quality, which is thus undesirable. From such a viewpoint, the Fe content in the plating bath is adjusted, so that the Fe content in the plating layer 103 is 15.00 mass% or less. The Fe content in the plating layer 103 is more preferably 10.00 mass% or less.

In the plating layer 103, the balance of the above Al, Mg, and Fe is Zn of 5.0000 mass% or more and impurities.

Zn is an element necessary to constitute the main metal structure (Zn-Al-Mg-based metal structure) of the plating layer 103 according to this embodiment, and an element important for improving the corrosion resistance as the plated steel sheet. Further, the plating layer 103 contains the above Al, Mg, and Fe in the above ranges, and further contains Zn of 5.0000 mass% or more, thereby making it possible to ensure the corrosion resistance required for the plated steel sheet.

Subsequently, the element group A to the element group E which the chemical composition of the plating layer 103 according the other aspect of this embodiment can selectively have will be explained in detail.

Note that in the plating layer 103 according to this embodiment, when at least any of the elements belonging to the following element group B to element group E is contained, it is preferable to contain at least any of the elements belonging to the following element group B to element group E within the following contents and in a total content of 5.0000 mass% or less.

Such effects expressed by addition of the elements as described in detail below can be enjoyed without impairing one another by setting the total content of the elements belonging to the element group B to the element group E to 5.0000 mass% or less. The total content of the elements belonging to the element group B to the element group E is preferably 1.0000 mass% or less, and more preferably 0.2000 mass% or less.

Further, in the other aspect of the plating layer 103 according to this embodiment, it is more preferable that the plating layer 103 contains Mg of not less than 9.00 mass% nor more than 15.00 mass% and contains Ca of not less than 0.05 mass% nor more than 4.00 mass% as the element group A, as the chemical composition. The plating layer 103 has such a chemical composition, thereby allowing the expression of more excellent corrosion resistance.

### ◊ Element group A

In the other aspect of the plating layer 103 according to this embodiment, the element group A which the plating layer 103 can contain will be explained. At least either of the elements in the element group A indicated below is the element which can be contained in the plating layer 103 in place of a part of Zn of the balance.
[Element group A]: one kind or two kinds selected from a group consisting of Si: more than 0% to 10.00% or less, and Ca: more than 0% to 4.00% or less

### [Si: 0 to 10.00 mass%]

A case of not containing Si in the plating layer 103 according to this embodiment can also be considered, and thus a lower limit of a content thereof is 0 mass%. On the other hand, Si is an element capable of suppressing excessive growth of an Fe-Al-based metal structure formed at an interface between the plating layer 103 and the base iron 101 and further improving the adhesiveness between the plating layer and the base iron 101. When Si is contained in the plating layer 103, a content of Si is preferably 0.05 mass% or more, and more preferably 0.20 mass% or more to suppress the excessive growth of the Fe-Al-based metal structure.

On the other hand, when the content of Si exceeds 10.00 mass%, there is a possibility of excessively forming a high melting point intermetallic compound with Mg to inhibit the formation of an Al-Mg oxide having a Zn evaporation suppression effect. Thus, it becomes difficult to suppress Zn evaporation in welding such a plated steel sheet. Consequently, the content of Si in the plating layer 103 is preferably 10.00 mass% or less. Further, when the Si content in the plating bath for manufacturing the plating layer 103 is too high, viscosity of the plating bath may increase more than necessary, and operability during manufacturing of the plated steel sheet (hereinafter, referred to as "plating operability".) may decrease. Therefore, the Si content in the plating layer 103 is preferably 5.00 mass% or less, and more preferably 2.00 mass% or less by adjusting the Si content in the plating bath from the viewpoint of plating operability.

### [Ca: 0 to 4.00 mass%]

A case of not containing Ca in the plating layer 103 according to this embodiment can also be considered, and thus a lower limit of a content thereof is 0 mass%. On the other hand, when Ca is contained in the plating layer 103, it forms intermetallic compounds with Al and Zn. Furthermore, when Si is contained together with Ca in the plating layer 103, Ca forms an intermetallic compound with Si. These intermetallic compounds have a high melting point and a stable structure, thus allowing further suppression of liquid metal embrittlement (LME) during welding of the plated steel sheet. When Ca is contained in the plating layer 103, such a suppression effect of the LME during welding is expressed by setting a Ca content to 0.01 mass% or more. The Ca content in the plating layer 103 is more preferably 0.10 mass% or more.

On the other hand, when the Ca content in the plating layer 103 exceeds 4.00 mass%, the corrosion resistance as the plated steel sheet may decrease. From such a viewpoint, the Ca content in the plating layer 103 is 4.00 mass% or less. The Ca content in the plating layer 103 is preferably 2.50 mass% or less, and more preferably 1.50 mass% or less.

### ◊ Element group B

Subsequently, in the other aspect of the plating layer 103 according to this embodiment, the element group B which the plating layer 103 can contain will be explained. At least any of the elements in the element group B indicated below is the element which can be contained in the plating layer 103 in place of a part of Zn of the balance.
[Element group B]: one kind or two or more kinds selected from a group consisting of Sb: more than 0% to 0.5000% or less, Pb: more than 0% to 0.5000% or less, and Sr: more than 0% to 0.5000% or less

[Sb: 0 to 0.5000 mass%]
[Pb: 0 to 0.5000 mass%]
[Sr: 0 to 0.5000 mass%]

A case of not containing Sb, Pb, and Sr in the plating layer 103 according to this embodiment can also be considered, and thus a lower limit of a content of each of these elements is 0 mass%. On the other hand, when at least any of Sb, Pb, and Sr is contained in the plating layer 103, spangles are formed on a surface of the plating layer 103, so that metallic luster can be improved. Thus, from the viewpoint of further improvement in design as the plated steel sheet, at least any of Sb, Pb, and Sr is preferably contained in the plating layer 103. Such a design improvement effect is expressed when the content of at least any of Sb, Pb, and Sr is 0.0500 mass% or more. Therefore, when at least any of Sb, Pb, and Sr is contained in the plating layer 103, it is preferable that the contents of these elements are each independently set to 0.0500 mass% or more.

On the other hand, when the plating layer 103 in which any of the contents of Sb, Pb, and Sr exceeds 0.5000 mass% is formed, a generation amount of dross in the plating bath used to form the plating layer 103 increases, and a plated steel sheet with good plating properties cannot be manufactured. Therefore, the contents of Sb, Pb, and Sr in the plating layer 103 are each independently 0.5000 mass% or less. It is preferable that the contents of Sb, Pb, and Sr are each independently 0.2000 mass% or less.

### ◊ Element group C

Subsequently, in the other aspect of the plating layer 103 according to this embodiment, the element group C which the plating layer 103 can contain will be explained. At least any of the elements in the element group C indicated below is the element which can be contained in the plating layer 103 in place of a part of Zn of the balance.
[Element group C]: one kind or two or more kinds selected from a group consisting of Cu: more than 0% to 1.0000% or less, Ti: more than 0% to 1.0000% or less, Cr: more than 0% to 1.0000% or less, Nb: more than 0% to 1.0000% or less, Ni: more than 0% to 1.0000% or less, Mn: more than 0% to 1.0000% or less, Mo: more than 0% to 1.0000% or less, Co: more than 0% to 1.0000% or less, and V: more than 0% to 1.0000% or less

[Cu: 0 to 1.0000 mass%]
[Ti: 0 to 1.0000 mass%]
[Cr: 0 to 1.0000 mass%]
[Nb: 0 to 1.0000 mass%]
[Ni: 0 to 1.0000 mass%]
[Mn: 0 to 1.0000 mass%]
[Co: 0 to 1.0000 mass%]
[V: 0 to 1.0000 mass%]

A case of not containing Cu, Ti, Cr, Nb, Ni, Mn, Co, and V in the plating layer 103 according to this embodiment can also be considered, and thus a lower limit of a content of each of these elements is 0 mass%. On the other hand, when at least any of Cu, Ti, Cr, Nb, Ni, Mn, Co and V is contained in the plating layer 103, these elements are incorporated into the Fe-Al metal structure formed by the welding when such a plated steel sheet is welded, and the corrosion resistance of the formed welded part can be further improved. Such an improvement effect of the corrosion resistance of the welded part is expressed when the content of at least any of Cu, Ti, Cr, Nb, Ni, Mn, Co and V in the plating layer 103 is 0.0050 mass% or more. Therefore, when at least any of Cu, Ti, Cr, Nb, Ni, Mn, Co and V is contained in the plating layer 103, it is preferable that the contents of these elements are each independently set to 0.0050 mass% or more.

On the other hand, when the plating layer 103 in which any of the contents of Cu, Ti, Cr, Nb, Ni, Mn, Co and V exceeds 1.0000 mass% is formed, these elements form various intermetallic compound phases in the plating bath to form the plating layer 103, causing the viscosity of the plating bath to increase to make it impossible to manufacture a plated steel sheet with good plating properties. Therefore, the contents of Cu, Ti, Cr, Nb, Ni, Mn, Co and V in the plating layer 103 are each independently set to 1.0000 mass% or less. It is preferable that the contents of Cu, Ti, Cr, Nb, Ni, Mn, Co and V are each independently 0.2000 mass% or less.

### [Mo: 0 to 1.0000 mass%]

A case of not containing Mo in the plating layer 103 according to this embodiment can also be considered, and thus a lower limit of a content thereof is 0 mass%. On the other hand, when Mo is contained in the plating layer 103, the corrosion resistance can be improved. Such an improvement effect of the corrosion resistance is expressed when a content of Mo is 0.0100 mass% or more. Therefore, when Mo is contained, the content thereof is preferably set to 0.0100 mass% or more.

On the other hand, a case of forming the plating layer 103 in which the content of Mo exceeds 1.0000 mass% causes a large amount of dross to be generated in the plating bath to be used, which is thus undesirable. Therefore, the content of Mo is 1.0000 mass% or less. The content of Mo is preferably 0.0500 mass% or less.

### ◊ Element group D

Subsequently, in the other aspect of the plating layer 103 according to this embodiment, the element group D which the plating layer 103 can contain will be explained. The elements in the element group D indicated below are the elements which can be contained in the plating layer 103 in place of a part of Zn of the balance.
[Element group D]: one kind or two or more kinds selected from a group consisting of Sn: more than 0% to 1.0000% or less, In: more than 0% to 1.0000% or less, and Bi: more than 0% to 1.0000% or less

[Sn: 0 to 1.0000 mass%]
[In: 0 to 1.0000 mass%]
[Bi: 0 to 1.0000 mass%]

A case of not containing Sn, In, and Bi in the plating layer 103 according to this embodiment can also be considered, and thus a lower limit of each of contents thereof is 0 mass%. Sn, In, and Bi are elements which increase a Mg dissolution rate when the plating layer 103 containing them is placed in the corrosive environment. When the Mg dissolution rate increases, Mg ions are supplied to a portion where the base iron 101 is exposed, to further improve the corrosion resistance. From such a viewpoint, when Sn, In, and Bi are contained, it is preferable that the contents of Sn, In, and Bi are each independently set to 0.0050 mass% or more.

On the other hand, excessive addition of Sn, In, and Bi may excessively accelerate the Mg dissolution rate, and the corrosion resistance as the plated steel sheet may decrease. Such an increase in the Mg dissolution rate becomes more pronounced when any of the contents of Sn, In, and Bi exceeds 1.0000 mass%, and thus the contents of Sn, In, and Bi are each independently 1.0000 mass% or less. It is preferable that the contents of Sn, In, and Bi are each independently 0.2000 mass% or less.

### ◊ Element group E

Subsequently, in the other aspect of the plating layer 103 according to this embodiment, the element group E which the plating layer 103 can contain will be explained. At least any of the elements in the element group E indicated below is the element which can be contained in the plating layer 103 in place of a part of Zn of the balance.
[Element group E]: one kind or two or more kinds selected from a group consisting of Zr: more than 0% to 1.0000% or less, Ag: more than 0% to 1.0000% or less, and Li: more than 0% to 1.0000% or less

[Zr: 0 to 1.0000 mass%]
[Ag: 0 to 1.0000 mass%]
[Li: 0 to 1.0000 mass%]

A case of not containing Zr, Ag, and Li in the plating layer 103 according to this embodiment can also be considered, and thus a lower limit of a content of each of these elements is 0 mass%. On the other hand, when at least any of Zr, Ag, and Li is contained in the plating layer 103, the plating operability can be further improved. Such an improvement effect of the plating operability is expressed when the content of at least any of Zr, Ag, and Li in the plating layer 103 is 0.0100 mass% or more. Therefore, when at least any of Zr, Ag, and Li is contained, it is preferable that the contents of these elements are each independently set to 0.0100 mass% or more.

On the other hand, when the plating layer 103 in which any of the contents of Zr, Ag, and Li exceeds 1.0000 mass% is formed, a large amount of dross is likely to be generated in the plating bath used to form the plating layer 103. Therefore, the content of at least any of Zr, Ag, and Li is independently 1.0000 mass% or less. It is preferable that the content of at least any of Zr, Ag, and Li is independently 0.1000 mass% or less.

### ◊ Element group F

Subsequently, in the other aspect of the plating layer 103 according to this embodiment, the element group F which the plating layer 103 can contain will be explained. At least any of the elements in the element group F indicated below is the element which can be contained in the plating layer 103 in place of a part of Zn of the balance.
[Element group F]: one kind or two or more kinds selected from a group consisting of La: more than 0% to 0.5000% or less, Ce: more than 0% to 0.5000% or less, and Y: more than 0% to 0.5000% or less

[La: 0 to 0.5000 mass%]
[Ce: 0 to 0.5000 mass%]
[Y: 0 to 0.5000 mass%]

A case of not containing La, Ce, and Y in the plating layer 103 according to this embodiment can also be considered, and thus a lower limit of a content of each of these elements is 0 mass%. On the other hand, La, Ce, and Y are elements which express almost the same effect as Ca, and further suppress the blowhole formation during welding. This is because an atomic radius of each element is close to an atomic radius of Ca. When these elements are contained in the plating layer 103, they replace a Ca position. Therefore, these elements are detected at the same position as Ca in EDS (energy dispersive X-ray spectroscopy).

The contents of these elements are each independently set to 0.0100 mass% or more, and such a suppression effect of the blowhole formation during welding is thereby expressed. Therefore, when at least any of Zr, Ag, and Li is contained, it is preferable that the contents of these elements are each independently set to 0.0100 mass% or more. It is more preferable that the contents of La, Ce, and Y in the plating layer 103 are each independently 0.0500 mass% or more.

On the other hand, when the La, Ce, and Y contents are too high in the plating bath for manufacturing the plating layer 103, the viscosity of the plating bath may increase more than necessary and the plating operability may decrease. Therefore, the La, Ce, and Y contents in the plating bath are adjusted from the viewpoint of the plating operability, so that the contents of La, Ce, and Y are each independently 0.5000 mass% or less. It is preferable that the contents of La, Ce, and Y are each independently 0.1000 mass% or less.

### ◊ Element group G

Subsequently, in the other aspect of the plating layer 103 according to this embodiment, the element group G which the plating layer 103 can contain will be explained. The element in the element group G indicated below is the element which can be contained in the plating layer 103 in place of a part of Zn of the balance.
[Element group G]: B: more than 0% to 0.5000% or less

### [B: 0 to 0.5000 mass%]

A case of not containing B in the plating layer 103 according to this embodiment can also be considered, and thus a lower limit of a content thereof is 0 mass%. On the other hand, when B is contained in the plating layer 103, it has the effect of further suppressing the LME. This is presumably because when B is contained in the plating layer 103, it forms various intermetallic compounds by combining with at least any of Zn, Al, Mg, and Ca. Further, the presence of B in the plating layer 103 is considered to have the effect of suppressing the LME of the base iron 101 by diffusing B from the plating layer 103 into the base iron 101 and strengthening grain boundary. Furthermore, the various intermetallic compounds formed with respect to B presumably also act on suppression of the Zn evaporation during welding because of their extremely high melting points. These improvement effects are expressed by containing B of 0.0500 mass% or more. Therefore, when B is contained, the content of B is preferably 0.0500 mass% or more.

On the other hand, in order to contain B in the plating layer 103, excessively containing B in the plating bath causes a rapid increase in a plating melting point to lead to a decrease in the plating operability, and plated steel sheets excellent in plating properties cannot be manufactured. Such a decrease in the plating operability becomes pronounced when the content of B exceeds 0.5000 mass%, and thus the content of B is 0.5000 mass% or less. The content of B is preferably 0.1000 mass% or less.

### [Measurement method of chemical component]

Chemical components of the above plating layer 103 can be measured using ICP-AES (inductively coupled plasma atomic emission spectrometry) or ICP-MS (inductively coupled plasma mass spectrometry). Note that the ICP-AES shall be used when analyzing chemical components down to 0.1 mass% units, and the ICP-MS shall be used when analyzing chemical components in trace amounts of less than 0.1 mass%. A sample cut from the non-heat-affected zone of the welded joint 1 is immersed in a 10% HCl aqueous solution with an inhibitor added for about one minute to peel off a portion of the plating layer, and the solution dissolving the plating layer is prepared. The chemical components as the overall average of the plating layer can be obtained by analyzing the obtained solution by the ICP-AES or the ICP-MS.

### ◊ Regarding coating weight of plating layer 103

Although a coating weight of the plating layer 103 as explained above is not particularly specified, for example, it is preferably about 15 to 250 g/m² per one side of the base iron. The coating weight of the plating layer 103 is in the range as described above, thereby allowing the plating layer 103 according to this embodiment to exhibit sufficient corrosion resistance.

Note that in such a coating weight of the plating layer 103, a sample is cut into a size of 30 mm × 30 mm in plan view from the non-heat-affected zone of the welded joint 1, and a mass thereof is measured beforehand. Note that the sample is cut entirely in a thickness direction when cut thereinto. A tape seal is applied to one side of the sample to prevent the plating layer on this side from dissolving in the next process. Such a sample is then immersed in the 10% HCl aqueous solution with an inhibitor added, the plating layer 103 is peeled off by pickling, and the mass of the sample after pickling is measured. From a change in the mass of the sample before and after pickling, the coating weight of the plating layer 103 per one side can be determined.

### ◊ Regarding metal structure of plating layer 103

Subsequently, the metal structure of the plating layer 103 having the chemical composition as explained above will be explained.

The plating layer 103 according to this embodiment has the chemical composition as describe above, and is formed through such a manufacturing method as described in detail below, thereby containing the metal structure such as an Fe₂Al₅ phase, an Fe₄Al₃ phase, an FeAl phase, an ηZn phase, an α phase, a MgZn₂ phase, a Mg₂Zn₃ phase, a MgZn phase, or a Mg phase. Further, depending on the elements which the plating layer 103 can further contain, the metal structure such as an Al-Si-Ca phase, an Al-Si-Ca-Fe phase, a Mg₂Si phase, or a Mg₂Sn phase can be contained in addition to the metal structures as described above. The plating layer 103 according to this embodiment has the metal structure as described above, thereby exhibiting properties of suppressing occurrence of the LME and also having the excellent corrosion resistance.

Here, what kind of metal structure the plating layer 103 according to this embodiment has can be identified by observing a cross section of the plating layer 103 with the SEM. That is, a solidified structure of the plating layer 103 is observed by the SEM, and what kind of metal structure the plating layer 103 has can be identified from a point analysis result with a SEM-EPMA in the viewing field.

In more detail, an observation position is set as the interior of the non-heat-affected zone on a back surface side, and a size of a region to be observed is set to 40 µm × 40 µm. Such a region is observed at a magnification of 2000 times as an acceleration voltage: 15.0 kV, an irradiation current: 5.0 × 10⁻⁷ A, and an irradiation time: 50 milliseconds. After acquiring a backscattered electron image in the focused region under such conditions, the point analysis of the metal structures is performed for each three points using a contrast of the backscattered electron image. Such measurement only needs to be performed regarding five arbitrary fields of view.

The present inventors have focused on the Fe₂Al₅ phase, the Fe₄Al₃ phase, and the FeAl phase which are the metal structures containing the element Fe and the element Al, and the MgZn₂ phase, the Mg₂Zn₃ phase, and the MgZn phase which are the metal structures containing the element Mg and the element Zn among the metal structures as described above in order to study the corrosion resistance of the base iron in the region located near the toe (hereinafter, also referred to as a "near-toe zone". The region corresponds to a "region R" illustrated in FIG. 2 to be described later.) Hereinafter, the Fe₂Al₅ phase, the Fe₄Al₃ phase, and the FeAl phase are collectively abbreviated as an "Fe-Al metal structure", and the MgZn₂ phase, the Mg₂Zn₃ phase, and the MgZn phase are collectively abbreviated as a "Mg-Zn metal structure".

In Al-Mg-Zn ternary plating, the Fe-Al metal structure and the Mg-Zn metal structure as described above are considered to be advantageous metal structures from the viewpoint of corrosion protection of the base iron. Thus, the present inventors have also intensively studied the plated steel sheet as a material in the presence of the Fe-Al metal structure and the Mg-Zn metal structure in the plating layer near the weld bead part 30, and come to specify the chemical composition of the plating layer for obtaining such a plated steel sheet, and the manufacturing method of the plated steel sheet.

Using the plated steel sheet achieved from the conception as described above as the material of the weld joint results in that at least either the Fe-Al metal structure or the Mg-Zn metal structure is present at a sufficient area ratio in the plating layer 103 in the region located near the toe (that is, the region R illustrated in FIG. 2) in the welded joint 1 according to this embodiment.

As explained earlier, in the welded joint 1 according to this embodiment, an end portion of the plating layer 103 which is near the toe T and closest to the toe T in the X-axis direction in cross-sectional view is handled as the starting point in considering the near-toe zone. In the example illustrated in FIG. 2, assuming that the end portion of the plating layer 103 is present at a position A in FIG. 2, the position A is the starting point in considering the near-toe zone.

Further, in the welded joint 1 according to this embodiment, the attention is focused on a region in a range from the above starting point to 100 µm (the region R in FIG. 2) toward the direction being orthogonal to the extension direction of the weld bead part 30 (the Y-axis direction in FIG. 2) and separating from the toe T and the heat-affected zone 40 (the X-axis direction in FIG. 2). In the example illustrated in FIG. 2, a position B is an end point in considering such a region R.

In this embodiment, the attention is focused on a case of observing a cross section cut in a direction orthogonal to the extension direction (the Z-axis direction in FIG. 2) (an X-Z plane in FIG. 2) with the scanning electron microscope (SEM) in the region R as exemplified in FIG. 2.

In such observation, in the welded joint 1 according to this embodiment, an average area ratio of the Fe-Al metal structure is 0 to 95%, an average area ratio of the Mg-Zn metal structure is 5 to 100%, and an average area ratio of the η-Zn phase is 3% or less, in the plating layer 103. That is, in the plating layer 103, the Fe-Al metal structure, the Mg-Zn metal structure, and the η-Zn phase are present so that a total of their respective average area ratios are 100% or less, and the average area ratios of the above metal structures fall in the ranges as described above.

When the average area ratio of the Fe-Al metal structure exceeds 95%, a presence ratio of the Mg-Zn metal structure advantageous to the corrosion resistance of the base iron 101 is too low, so that corrosion resistance in the near-toe zone cannot be further improved. The average area ratio of the Fe-Al metal structure is 95% or less, and thereby the Mg-Zn metal structure advantageous to the corrosion resistance of the base iron can be left in the plating layer 103, so that the corrosion resistance in the near-toe zone can be further improved. The average area ratio of the Fe-Al metal structure is preferably 80% or less.

On the other hand, the Fe-Al metal structure does not always remain in the near-toe zone after welding depending to the Fe content of the plating layer in the plated steel sheet serving as the material. Thus, a lower limit of the average area ratio of the Fe-Al metal structure in the plating layer 103 is 0%. However, regarding the corrosion resistance of the near-toe zone, the Fe-Al metal structure and the Mg-Zn metal structure are preferably present together in the plating layer 103, and from such a viewpoint, the average area ratio of the Fe-Al metal structure is preferably more than 0%. The average area ratio of the Fe-Al metal structure is more preferably 20% or more.

Further, when the average area ratio of the Mg-Zn metal structure is less than 5%, the presence ratio of the Mg-Zn metal structure advantageous to the corrosion resistance of the base iron 101 is too low, so that the corrosion resistance in the near-toe zone cannot be further improved. The average area ratio of the Mg-Zn metal structure is 5% or more, and thereby the corrosion resistance in the near-toe zone can be further improved. The average area ratio of the Mg-Zn metal structure is preferably 30% or more.

On the other hand, the average area ratio of the Mg-Zn metal structure may be 100%. However, regarding the corrosion resistance of the near-toe zone, the Fe-Al metal structure and the Mg-Zn metal structure are preferably present together in the plating layer 103, and from such a viewpoint, the average area ratio of the Mg-Zn metal structure is preferably 80% or less.

Here, in this embodiment, the Fe-Al metal structure means a metal structure in which when SEM observation of the cross section is performed to acquire element mapping using the SEM-EPMA in accordance with such a method as explained below, the contents of Fe and Al are each 25 atom% or more, and a total content of Fe and Al is 80 atom% or more.

Further, in this embodiment, the Mg-Zn metal structure means a metal structure in which when the SEM observation of the cross section is performed to acquire element mapping using the SEM-EPMA in accordance with such a method as explained below, the contents of Mg and Zn are each 10 atom% or more, and a total content of Mg and Zn is 85 atom% or more.

On the other hand, the η-Zn phase is a phase which does not act advantageously in the viewpoint of the corrosion protection of the base iron, and thus the presence of the η-Zn phase is tolerated to a certain degree of the area ratio in the plating layer 103, but the area ratio is preferably as small as possible. From such a viewpoint, in this embodiment, the average area ratio of the η-Zn phase is set to 3% or less.

When the average area ratio of the η-Zn phase exceeds 3%, the ratio of the η-Zn phase becomes too large in the plating layer 103, so that the corrosion resistance in the near-toe zone cannot be further improved. On the other hand, the average area ratio of the η-Zn phase is preferably as small as possible as described above, and it is most preferable that no η-Zn phase is contained.

Note that in this embodiment, the η-Zn phase means a phase in which when the SEM observation of the cross section is performed to acquire element mapping using the SEM-EPMA in accordance with such a method as explained below, the content of Zn is 98 atom% or more, and contents of the other elements are 2 atom% or less in total.

Here, containing no η-Zn phase includes, in such a calculation method of an average area ratio as explained below, not only a case where the η-Zn phase is not present at all but also a case where the presence of the η-Zn phase is below detection resolution or where the calculated average area ratio has a value so small that it can be regarded as almost zero in a measurement method in use.

Further, when the cross section of the region of the near-toe zone as described above is observed, a Mg phase is preferably further contained in least a part of the plating layer 103. The Mg phase is a phase which acts extremely advantageously in the viewpoint of the corrosion resistance of the base iron 101, and furthermore, a phase which also acts advantageously to the suppression of the LME. Thus, the Mg phase is further contained in at least a part of the plating layer 103, thereby further improving the corrosion resistance in the near-toe zone, and also allowing further suppression of the LEM.

Here, in this embodiment, the Mg phase means a phase in which when the SEM observation of the cross section is performed to acquire element mapping using the SEM-EPMA in accordance with such a method as explained below, the content of Mg is 85 atom% or more.

FIG. 4 schematically illustrates a distribution of the metal structures regarding the plating layer 103 in the near-toe zone of the welded joint 1 according to this embodiment.

The welded joint 1 according to this embodiment is manufactured by using a specific plated steel sheet as a material. At this time, the plated steel sheet is manufactured through a specific manufacturing method as explained below, and thereby in the plating layer of the plated steel sheet serving as the material, alloying of Fe and Al is promoted during welding, and Mg (furthermore Ca in some cases) is concentrated in a liquid phase present during welding. Thus, in the plating layer 103 after welding, as schematically illustrated in FIG. 4, the Fe-Al metal structure is often unevenly distributed more on the base iron 101 side than the Mg-Zn metal structure. In more detail, the Fe-Al metal structure is unevenly distributed more on a side close to the base iron 101, and the Mg-Zn metal structure is often present over such an Fe-Al metal structure.

### ◊ Calculation method of average area ratio of metal structure of plating layer 103

Here, the average area ratio as described above is measured as follows.

That is, an arbitrary point within the region R illustrated in FIG. 2 is observed by the SEM, and element mapping is acquired using the SEM-EPMA. The area ratio of each metal structure is calculated by subjecting the acquired element mapping to thresholding using a thresholding function of a commercially-available image analysis application, and identifying the metal structure having the composition as explained earlier.

In more detail, in cross-sectional view at an arbitrary position in plan view of the plating layer 103, a region of 60 µm × 40 µm (corresponding to a magnification of about 2000 times.) is observed by the SEM. At this time, the point analysis is performed on each metal structure present in a visual field by the SEM-EPMA. In an analysis result of the EPMA, the metal structure in which the contents of Fe and Al are each 25 atom% or more, and the total content of Fe and Al is 80 atom% or more is judged the Fe-Al metal structure, and the metal structure in which the contents of Mg and Zn are each 10 atom% or more, and the total content of Mg and Zn is 85 atom% or more is judged the Mg-Zn metal structure. Further, the phase in which the content of Zn is 98 atom% or more, and the contents of the other elements are 2 atom% or less in total is judged the η-Zn phase, and the phase satisfying Mg: 85 atom% or more, and the other elements: 15 atom% or less in total is judged the Mg phase.

In more detail, in the observation with the SEM, the above region of 60 µm × 40 µm is observed at a magnification of 2000 times as an acceleration voltage: 15.0 kV, an irradiation current: 4.999 × 10⁻⁸ A, and an irradiation time: 50 milliseconds. After acquiring a backscattered electron image of the focused region under such conditions, the point analysis of the metal structures only needs to be performed for each three points using a contrast of the backscattered electron image.

After identifying each phase in the visual field in such a manner, a region of each metal structure in the visual field is identified to calculate an area ratio in each identified region using various image analysis applications (for example, ImageJ and the like).

The measurement and calculation processing as described above is performed on five cross sections within the region R, and an average value of the five acquired area ratios is calculated regarding the area ratio of each metal structure. The acquired average value is regarded as an average area ratio of each metal structure.

The non-heat-affected zone in the welded joint 1 according to this embodiment has been explained above in detail with reference to FIG. 2 to FIG. 4.

Note that the non-heat-affected zone in the welded joint 1 according to this embodiment may further have one layer or two or more layers of various films on the above plating layer 103. As such films, for example, there can be cited a chromate film, a phosphate film, a chromate-free film, an organic resin film, and the like.

### (Regarding manufacturing method of plated steel sheet serving as material)

Next, an example of a manufacturing method of the plated steel sheet serving as the material of the welded joint 1 as explained above will be explained.

The plated steel sheet serving as the material of the welded joint 1 according to this embodiment uses the base iron 101 as described above as a base metal, and is manufactured by applying a strain to a surface of such a base iron 101 by heavy duty grinding to thereafter form the plating layer with respect to the surface on which the strain is applied. Thereafter, the plated steel sheet serving as the material of the welded joint 1 is manufactured by performing specific heat treatment on the plating layer formed on the surface of the base iron 101.

Here, grinding the surface of the base iron 101 with a heavy grinding brush to apply the strain to the surface allows the alloying of Fe and Al to be promoted when the plated steel sheet serving as the material is provided for welding. Mg (furthermore Ca depending on the chemical composition of the plating layer) is concentrated in the liquid phase present during welding by promoting the alloying of Fe and Al during welding. As a result, it becomes possible to form the Mg-Zn metal structure which acts advantageously to the corrosion resistance of the base iron 101.

In addition to the hot-dip plating method, a thermal spraying method, a cold spraying method, a sputtering method, a vapor deposition method, an electroplating method, and the like can be applied to the formation of the plating layer. However, the hot-dip plating method is the most preferable in terms of cost to form a plating layer with a generally used level of thickness for automobiles and the like.

Thereafter, the plated steel sheet serving as the material can be manufactured by performing a specific heat treatment process as explained below on the obtained plated steel sheet.

Hereinafter, an example of the manufacturing method for obtaining the plated steel sheet for the presence using the hot-dip plating method will be explained in detail.

In the manufacturing process for such a plated steel sheet, first, the steel sheet used as the base metal is rolled by a Sendzimir method to a desired sheet thickness, then coiled and installed in a hot-dip plating line.

In the hot-dip plating line, the steel sheet is continuously passed while uncoiled from a coil. During the sheet passing, the strain is made to be applied to the surface of the steel sheet by the heavy grinding brush provided in a predetermined position. Thereafter, the steel sheet is subjected to heat reduction treatment at 700 to 900°C for more than 0 seconds to 300 seconds or less in an atmosphere, having a dew point of -60 to 10°C, of N₂-(1 to 10)% H₂ gas under an environment less likely to cause the oxidation, in which an oxygen concentration is 20 ppm or less, and is thereafter air-cooled with a N₂ gas to around a bath temperature of the plating bath at a subsequent stage + 20°C by an annealing facility provided on the line, to be immersed in the plating bath, for example. Note that in the above flow, the strain is applied to the steel sheet before annealing, but the alloying of Fe and Al can be promoted even when at least a part of the applied strain is opened by annealing.

Here, a plating alloy in a molten state, having the chemical components as previously described, is prepared in the plating bath. The bath temperature of the plating bath is set to equal to or more than the melting point (for example, about 460 to 660°C) of the plating alloy. In preparing a material for the plating alloy, pure metal (purity of 99% or higher) is preferably used and prepared as the alloy material. First, predetermined amounts of the alloy metals are mixed to obtain the composition of the plating layer as described above, and completely melted into an alloy using a high-frequency induction furnace, an arc furnace, or the like under vacuum or inert gas replacement conditions. Furthermore, the alloy by being mixed in the predetermined components (composition of the above plating layer) is melted in the air, and the obtained melt is used as the plating bath.

Note that there is no particular restriction on using pure metals in the preparation of the plating alloys as described above, and existing Zn alloys, Mg alloys, and Al alloys may be melted and used. At this time, there is no problem as long as even a predetermined composition alloy with few impurities is used.

After the steel sheet is immersed in the plating bath as described above, it is pulled up at a predetermined speed. At this time, a plating coating weight is controlled by, for example, a N ₂ wiping gas so that the plating layer to be formed has the desired thickness. Here, as conditions other than the bath temperature, general plating operation conditions only need to be applied, and special facilities and conditions are unnecessary.

Subsequently, a first cooling process and a second cooling process as described below are performed on the plating alloy in a molten state located on the steel sheet to make the plating alloy in the molten state into the plating layer 103. The first cooling process and the second cooling process are explained in detail below.

The first cooling process is a cooling process which is performed when the temperature of the plating alloy is in a range of the bath temperature to 250°C, and the plated steel sheet in the temperature range as described above is rapidly cooled at an average cooling rate of 10°C/second or more under an atmosphere with a dew point of -20°C or less. The temperature range of the bath temperature to 250°C makes a coarse oxide likely to be formed on the surface of the plating layer, and thus setting the dew point to -20°C or less and setting the average cooling rate to 10°C/second or more is for preventing oxidation in a high-temperature range. Note that when the hot-dip plating method is employed in the plating process, such a first cooling process is performed from immediately after the steel sheet comes out of the plating bath. This causes the plating alloy located on the surface of the steel sheet to solidify to form the plating layer.

Thereafter, when the temperature of the plating alloy (plating layer) is in a range of 250 to 50°C, the second cooling process is performed. The second cooling process is a process of slowly cooling the plated steel sheet in the temperature range of 250 and 50°C at an average cooling rate of less than 10°C/second under an atmosphere with a dew point of 0°C or more. In such a second cooling process, a dense oxide can be formed in a low-temperature range by setting the dew point to 0°C or more and setting the average cooling rate to less than 10°C/second.

Note that regarding a shift of the average cooling rate and the dew point from the first cooling process to the second cooling process, providing two or more piping systems of atmosphere gases to be blown for dew point control allows a smooth shift, which is thus preferable. Further, when both the average cooling rate and the dew point are difficult to shift at the same time with a temperature of 250°C bordered, the average cooling rate may be shifted with 250°C bordered, and the atmosphere gas for the dew point control may be shifted in a range of temperatures of 260 to 240°C.

As described above, forming the plating layer after applying the strain to the surface of the base iron 101 with the heavy grinding brush, and furthermore, providing such a two-stage cooling process as to rapidly cool such a plating layer in the temperature range of the bath temperature to 250°C, and slowly cool it in the temperature range of 250 to 50°C allow suppression of evaporation of a Mg-Zn liquid phase in plating, to enable the formation of the Fe-Al metal structure and the Mg-Zn metal structure as explained earlier.

Here, an interval between an end of the first cooling process and a start of the second cooling process is preferably within three seconds, and the second cooling process is preferably started immediately after the end of the first cooling process. When the interval between the end of the first cooling process and the start of the second cooling process exceeds three seconds, an unintended cooling process occurs and the plating layer 103 in the ranges of this embodiment as described above cannot be achieved.

Here, a lower limit value of the dew point is not particularly specified in the above first cooling process, but, for example, approximately -90°C is the practical lower limit. Further, the average cooling rate is more preferably 40°C/second or more. Note that an upper limit value of the average cooling rate is not particularly specified, but, for example, approximately 90°C/second is the practical upper limit.

Further, in the above second cooling process, an upper limit value of the dew point is not particularly specified, but, for example, approximately 20°C is the practical upper limit. Further, the average cooling rate is more preferably 4°C/second or less.

Note that even though the strain is applied appropriately to the surface of the base iron 101, the plating layer 103 in the ranges of this embodiment as described above cannot be achieved when one of the first cooling process and the second cooling process as described above is not performed. The strain is applied appropriately to the surface of the base iron 101, and thereafter both the first cooling process and the second cooling process as described above are further performed, thereby allowing the plating layer 103 according to this embodiment to be achieved.

Further, when an alloying heat treatment process (for example, a heat treatment process involving heating to an ultimate sheet temperature of about 480 to 550°C), which is often performed in the manufacture of alloyed hot-dip galvanized steel sheets in general, is performed after the above second cooling process, a state of the Fe-Al metal structure and the Mg-Zn metal structure controlled by the first cooling process and the second cooling process is disrupted, resulting in failing to obtain such a corrosion resistance improvement effect in the near-toe zone as attention is focused on in this embodiment. From such a viewpoint, it is important not to perform the heat treatment process after the second cooling process.

Here, for the cooling treatment as described above, a generally known method such as N₂ gas cooling can be applied. Further, in addition to a N₂ gas, other gases with high heat removal effects such as a He gas and a hydrogen gas may be used as the cooling gas.

Note that as an actual measurement method of the temperature of the plating layer, for example, a contact-type thermocouple (K-type) only needs to be used. By attaching the contact-type thermocouple to the base iron 101 serving as the base metal, the average temperature of an entire plating layer can be constantly monitored. Also, by mechanically controlling various speeds and thicknesses, and by standardizing various operating conditions such as a preheating temperature of the base iron 101 and the temperature of the plating bath, the temperature of the entire plating layer at that point under such manufacturing conditions can be monitored almost accurately. This makes it possible to precisely control the cooling treatment in the first cooling process and the second cooling process. Note that the surface temperature of the plating layer may also be measured by a non-contact radiation thermometer, although this is not as accurate as the contact type.

Further, a relationship between the surface temperature of the plating layer and the average temperature of the entire plating layer may be determined by a simulation of performing a heat conduction analysis. Concretely, the surface temperature of the plating layer and the average temperature of the entire plating layer are determined based on various manufacturing conditions, such as the preheating temperature of the base iron 101, the temperature of the plating bath, the pulling-up speed of the steel sheet from the plating bath, the sheet thickness of the base iron 101, the layer thickness of the plating layer, a heat quantity of heat exchange between the plating layer and the manufacturing facility, and a heat release amount of the plating layer. Thereafter, the obtained results only need to be used to determine the relationship between the surface temperature of the plating layer and the average temperature of the entire plating layer. This makes it possible to estimate the average temperature of the entire plating layer at that time under the manufacturing conditions by actually measuring the surface temperature of the plating layer during the manufacturing of the plated steel sheet. As a result, the cooling treatment in the first cooling process and the second cooling process can be precisely controlled.

The example of the manufacturing method of the plated steel sheet according to this embodiment has been concretely explained above.

Note that in the manufacturing method of the plated steel sheet according to this embodiment, a further treatment to form one layer or two or more layers of various films may be performed after the above second cooling process. As such treatment, for example, there can be cited chromate treatment, phosphate treatment, chromate-free treatment, organic resin film formation treatment, or the like.

Examples of the chromate treatment include electrolytic chromate treatment which forms a chromate film by electrolysis, reactive chromate treatment which forms a film by using reaction with a material and then washes off an excess treatment solution, coating-type chromate treatment which forms a film by applying a treatment solution and drying it without water washing, and the like, and any of the chromate treatments may be used.

As the electrolytic chromate treatment, there can be exemplified the electrolytic chromate treatment using, for example, chromic acid, silica sol, resin (phosphoric acid resin, acrylic resin, vinylester resin, vinyl acetate acrylic emulsion, carboxylated styrene butadiene latex, diisopropanolamine modified epoxy resin, and the like), and hard silica.

As the phosphate treatment, for example, zinc phosphate treatment, calcium zinc phosphate treatment, manganese phosphate treatment, and the like can be exemplified.

The chromate-free treatment is particularly suitable because it does not place a burden on the environment. Such chromate-free treatment includes electrolytic chromate-free treatment which forms a chromate-free film by electrolysis, reactive chromate-free treatment which forms a film by using reaction with a material and then washes off an excess treatment solution, coating-type chromate-free treatment which forms a film by applying a treatment solution and drying it without water washing, and the like, and any of the chromate-free treatments may be used.

Further, the organic resins used in the organic resin film formation treatment are not limited to specific resins, but, for example, various resins such as polyester resins, polyurethane resins, epoxy resins, acrylic resins, polyolefin resins, and modified versions of these resins can be used. Here, the modified versions mean resins in which reactive functional groups contained in a structure of these resins are reacted with other compounds (for example, monomers, crosslinking agents, or the like) containing functional groups, which can react with such functional groups, in the structure.

As the organic resins, one kind of those as described above may be used alone, or two or more kinds of the organic resins (not modified) may be mixed and used. Further, in the presence of at least one kind of the organic resin, at least one kind of the other organic resins is modified, and one kind or two or more kinds of organic resins obtained thereby may also be mixed and used. In addition, an organic resin made aqueous by dissolving or dispersing it in water may be used. Furthermore, various coloring pigments and rust preventive pigments may be contained in such organic resin films.

### (Regarding manufacturing method of welded joint)

The welded joint according to this embodiment is manufactured by using the plated steel sheet manufactured in the above manner, for example, as the material steel sheets of the first steel sheet and the second steel sheet in manufacturing the welded joint, and then arranging such material steel sheets to be in the shape required for the welded joint, and welding the material steel sheets.

Here, an arc welding method or a laser welding method can be used for the welding of the material steel sheets. At this time, the state of the near-toe zone as described above can be achieved by performing the welding under the welding conditions as explained below for each welding method.

In more detail, when welded joints are manufactured by the arc welding, for example, the material steel sheets only need to be welded according to the welding conditions as follows.
Welding current: 250 A, welding voltage: 26.4 V, welding speed: 100 cm/min.
Welding gas: 20% CO₂ + Ar, gas flow rate: 20 L/min.
Welding wire: YGW16, ϕ1.2 mm, manufactured by Nippon Steel Welding & Engineering Co., Ltd.
(C: 0.1 mass%, Si: 0.80 mass%, Mn: 1.5 mass%, P: 0.015 mass%, S: 0.008 mass%, Cu: 0.36 mass%)
Inclination angle of welding torch: 45°

Further, when welded joints are manufactured by the laser welding, for example, the material steel sheets only need to be welded according to the welding conditions as follows.
Output: 7 kW, welding speed: 400 cm/min., forward/backward angle: 0°

An example of the manufacturing method of the welded joint according to this embodiment has been explained above.

Note that in the above embodiment, as the material steel sheets of the first steel sheet 10 and the second steel sheet 20, a case of using the zinc-based plated steel sheet in which the above plating layer 103 is provided over the whole of both surfaces of the base iron 101 has been taken as an example to be explained. However, the above plating layer 103 only needs to be present on at least a section where the first steel sheet 10 and the second steel sheet 20 overlap each other.

### [EXAMPLES]

Hereinafter, the welded joint according to the present invention will be concretely explained while showing examples and comparative examples. Note that the examples shown below are only one example of the welded joint according to the present invention, and the welded joint according to the present invention is not limited to the examples shown below.

In the examples and the comparative examples shown below, as the base iron 101 serving as the base metal, a hot-rolled steel sheet (0.05 mass% C-0.007 mass% Si-0.25 mass% Mn, manufactured by Nippon Steel Corporation) with a sheet thickness of 3.2 mm was used. A plurality of specimens were each prepared using such a hot-rolled steel sheet.

With respect to the prepared specimens, the strain was applied to a surface of the specimens using the following two types of heavy grinding brushes. Note that in grinding, a NaOH aqueous solution of 1.0 to 5.0% was applied to the surface of the steel sheet. A strain amount applied to the surface was controlled by appropriately adjusting a brush reduction amount in a range of 0.5 to 10.0 mm and the number of brush rotations in a range of 100 to 1000 rpm. Note that a brash type A is a brush having stronger grinding force between the two types of heavy grinding brushes indicated below. Incidentally, for comparison, a specimen free from such heavy duty grinding was also prepared.

Brush type A: D-100 manufactured by HOTANI Co., Ltd.
Brush type B: M-33 manufactured by HOTANI Co., Ltd.

Plating baths to achieve plating layers with compositions as listed in Table 1 below were each prepared and each installed in a batch-type hot-dip plating test apparatus manufactured in-house, and the above specimens were plated. Here, the temperature of the specimens was measured using a thermocouple spot-welded at the center of the specimens. Further, for the specimens to be immersed in the plating baths, a surface of the plating substrates was subjected to heat reduction treatment at 800°C in a N₂-5% H₂ gas atmosphere in a furnace with the oxygen concentration of 20 ppm or less before immersion in the plating baths. After the heat reduction treatment, the specimens were air-cooled with a N₂ gas, and immersed in the plating baths in the hot-dip plating test apparatus for about three seconds after the temperature of the specimens reached the bath temperature + 20°C.

After the immersion in the plating baths, the specimens were pulled up at a pulling-up speed of 20 to 200 mm/second. At the time of pulling-up, a N₂ wiping gas was used to control a desired plating coating weight. In the following examples and comparative examples, the plating coating weight was controlled so that the coating weight of each plating layer after drying per one side of each specimen was 40 to 120 g/m². After pulling up the specimens from the plating baths, the specimens were cooled from the plating bath temperature to room temperature under the conditions listed in Table 1 below. In the examples and the comparative examples shown below, the second cooling process was started immediately after the end of the first cooling process (that is, the interval between the end of the first cooling process and the start of the second cooling process was set to 0.2 seconds or less).

Here, the steel sheets were cut into a size of 30 mm × 30 mm from the specimens plated as described above, and the plated steel sheets were immersed in a 10% HCl aqueous solution with an inhibitor added to pickle and peel the plating layers, and thereafter the compositions of the plating layers were each measured by ICP analysis of the elements dissolved in the aqueous solution.

Further, from each of the obtained specimens, a steel sheet cut into a size of 150 mm × 50 mm was set as a first steel sheet, and a steel sheet cut into a size of 150 mm × 30 mm was set as a second steel sheet. Long sides of these steel sheets were overlapped and welded by arc welding (lap fillet welding) to be a welded joint.

Here, welding conditions for the arc welding are as follows.
Welding current: 250 A, welding voltage: 26.4 V, welding speed: 100 cm/min.
Welding gas: 20% CO₂ + Ar, gas flow rate: 20 L/min.
Welding wire: YGW16, ϕ1.2 mm, manufactured by Nippon Steel Welding & Engineering Co., Ltd.
(C: 0.1 mass%, Si: 0.80 mass%, Mn: 1.5 mass%, P: 0.015 mass%, S: 0.008 mass%, Cu: 0.36 mass%)
Inclination angle of welding torch: 45°
Overlap allowance: 10 mm
Steel sheet size: Upper sheet side (first steel sheet) 150 × 50 mm, lower sheet side (second steel sheet) 150 × 30 mm
Gap between steel sheets: 0 mm

Further, welding conditions for the laser welding are as follows.
Output: 7 kW, welding speed: 400 cm/min., forward/backward angle: 0°
Steel sheet size: Upper sheet side (first steel sheet) 150 × 50 mm, lower sheet side (second steel sheet) 150 × 30 mm
Overlap allowance: 10 mm
Gap between steel sheets: 0 mm

### <Evaluation of metal structure of near-toe zone (region R)>

Regarding each of the welded joints obtained in the above manner, a cross-section observation of a near-toe zone (region R) was performed with a SEM by the method explained earlier to calculate average area ratios of an Fe-Al metal structure and a Mg-Zn metal structure, and identify the presence/absence of a Mg phase and an η-Zn phase.

### <Evaluation of corrosion resistance of near-toe zone>

Automotive phosphate conversion treatment (Zn phosphatization, SD5350 system: Nippon Paint Industrial Coding Co. Ltd. standard) and electrodeposition coating (PN110 Power Nix Gray: Nippon Paint Industrial Coding Co., Ltd. standard) were performed on the welded joints after performing the cross-section observation as described above . At this time, an electrodeposited film thickness was set to 20 µm. The samples after the electrodeposition coating were each subjected to a combined cycle corrosion test (360 cycles) according to JASO (M609-91) to evaluate a corrosion depth of the base iron in the near-toe zone. The evaluation criteria were as follows.

### <<Evaluation Criteria>>

Grade "AAA": Corrosion depth of base iron of 0.1 mm or less
"AA": Corrosion depth of base iron of more than 0.1 mm to 0.5 mm or less
"A": Corrosion depth of base iron of more than 0.5 mm to 1.5 mm or less
"B": Corrosion depth of base iron of more than 1.5 mm

Further, as long as the corrosion depth of the base iron as described above is 1.5 mm or less, the near-toe zone of the focused specimen can be evaluated to have good corrosion resistance.

The obtained results were collectively listed in Table 1 below.

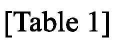

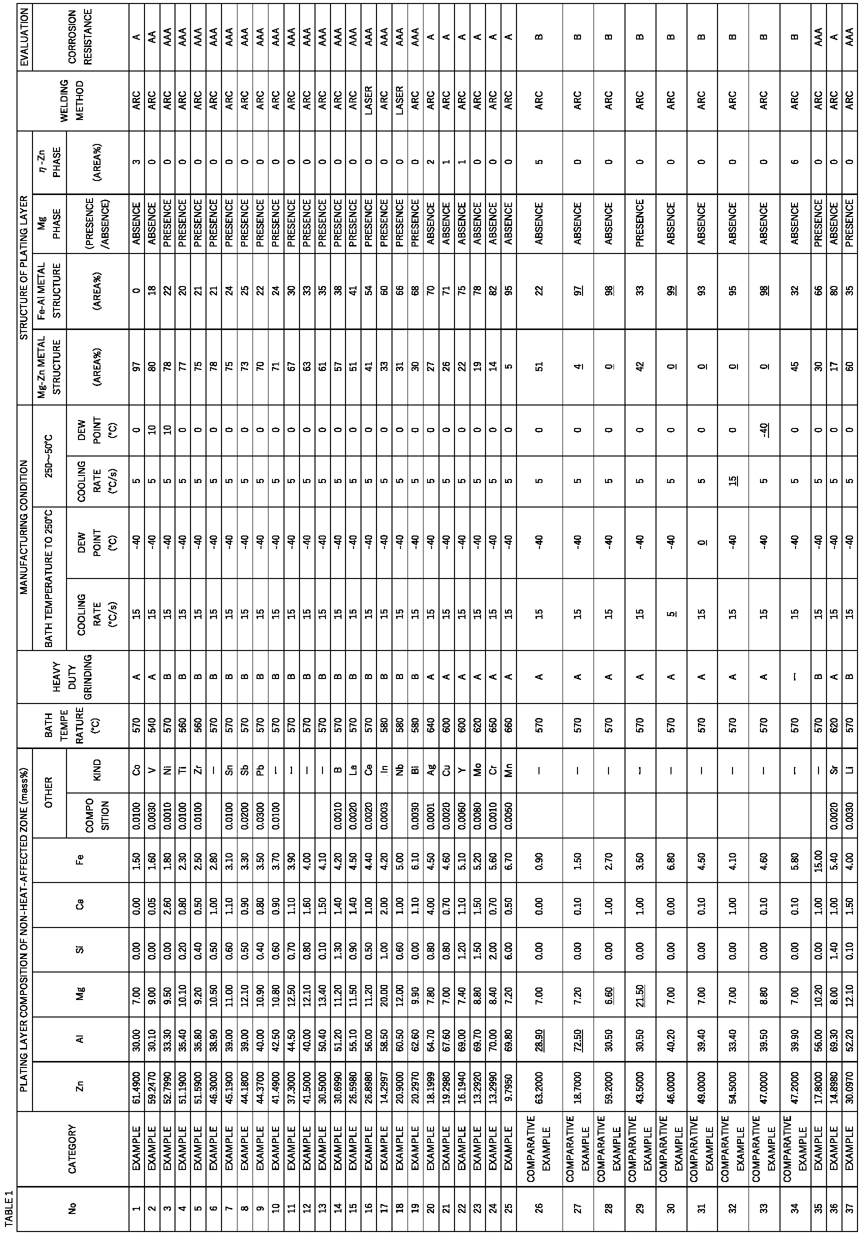

As it is clear from Table 1 above, it is found that examples corresponding to the examples of the present invention can achieve excellent corrosion resistance in the near-toe zone, whereas examples corresponding to the comparative examples of the present invention fail to exhibit sufficient performance in terms of corrosion resistance in the near-toe zone.

For example, in No. 26 in which an Al content of the plating layer was out of the range of the present invention, a Mg concentration was relatively insufficient, which forms an η phase, resulting in insufficient corrosion resistance. In No. 27 in which an Al content of the plating layer was out of the range of the present invention, a Mg-Zn phase became insufficient due to an excessive content of Al, resulting in insufficient corrosion resistance.

In No. 28 in which a Mg content of the plating layer was out of the range of the present invention, Zn constituting the plating layer excessively burned during welding, resulting in insufficient corrosion resistance. In No. 29 in which a Mg content of the plating layer was out of the range of the present invention, corrosion resistance was insufficient due to excessive Mg.

In No. 30 in which an average cooling rate in the first cooling process was out of the range of the present invention, and No. 31 in which a flow rate of the cooling medium in the first cooling process was out of the range of the present invention, Zn constituting the plating layer excessively burned during welding, resulting in insufficient corrosion resistance.

In No. 32 in which an average cooling rate in the second cooling process was out of the range of the present invention, and No. 33 in which a flow rate of the cooling medium in the second cooling process was out of the range of the present invention, Zn constituting the plating layer excessively burned during welding, resulting in insufficient corrosion resistance.

In No. 36 in which a strain was not applied to the base iron, the failure to control alloying formed an η phase, resulting in insufficient corrosion resistance.

Preferred embodiments of the present invention have been described above in detail with reference to the attached drawings, but the present invention is not limited to the embodiments. It should be understood that various changes and modifications are readily apparent to those skilled in the art who have the common general knowledge in the technical field to which the present invention pertains, within the scope of the technical spirit as set forth in claims, and they should also be covered by the technical scope of the present invention.

The embodiment disclosed herein is an example in all respects and should not be considered to be restrictive. The above-described embodiment may be omitted, substituted, or modified in various forms without departing from the scope of the appended claims and the configuration and gist that fall within the technical scope of the present invention as described below. For example, configuration requirements of the above-described embodiment can be arbitrarily combined within a range that does not impart the effects. Further, the operations and effects about the configuration requirements relating to an arbitrary combination can be obtained as a matter of course from the combination, and those skilled in the art can obtain clear other operations and other effects from the description herein.

Further, the effects explained herein are merely explanatory or illustrative in all respects and not respective. That is, the technique relating to the present invention can offer other clear effects to those skilled in the art from the description herein in addition to or in place of the above-described effects.

Note that the following configuration also belongs to the technical scope of the present invention.
(1) A welded joint includes a first steel sheet and a second steel sheet connected to a weld bead part whose extension direction is set as a long side in plan view, wherein:
   the first steel sheet and the second steel sheet each have a heat-affected zone located around the weld bead part, and a non-heat-affected zone not affected by heat due to the welding;
   at least either the first steel sheet or the second steel sheet has a base iron and a plating layer on the base iron in the non-heat affected zone;
   the plating layer is a plating layer having a chemical composition containing, by mass%,
   Al: 30. 00 to 70.00%
   Mg: 7.00 to 20.00%
   Fe: 0.01 to 15.00%, and selectively containing one kind or two or more kinds of elements selected from a group consisting of an element group A, an element group B, an element group C, an element group D, an element group E, an element group F, and an element group G described below, with the balance composed of Zn of 5.00 mass% or more and impurities; and
   when viewed from a toe defined in JIS Z3001 (2018) toward a direction being orthogonal to the extension direction and separating from the toe, an average area ratio of an Fe-Al metal structure is 0 to 95%, an average area ratio of a Mg-Zn metal structure is 5 to 100%, and an average area ratio of an η-Zn phase is 3 area% or less in the plating layer when a cross section cut in a direction orthogonal to the extension direction is observed by a scanning electron microscope regarding a region, with an end portion of the plating layer closest to the toe set as a starting point, in a range from the starting point to 100 µm, configured in order of the toe, a region where the heat-affected zone or the base iron is exposed, and a region having the plating layer.
      [Element group A]: one kind or two kinds selected from a group consisting of Si: more than 0% to 10.00% or less, and Ca: more than 0% to 4.00% or less
      [Element group B]: one kind or two or more kinds selected from a group consisting of Sb: more than 0% to 0.5000% or less, Pb: more than 0% to 0.5000% or less, and Sr: more than 0% to 0.5000% or less
      [Element group C]: one kind or two or more kinds selected from a group consisting of Cu: more than 0% to 1.0000% or less, Ti: more than 0% to 1.0000% or less, Cr: more than 0% to 1.0000% or less, Nb: more than 0% to 1.0000% or less, Ni: more than 0% to 1.0000% or less, Mn: more than 0% to 1.0000% or less, Mo: more than 0% to 1.0000% or less, Co: more than 0% to 1.0000% or less, and V: more than 0% to 1.0000% or less
      [Element group D]: one kind or two or more kinds selected from a group consisting of Sn: more than 0% to 1.0000% or less, In: more than 0% to 1.0000% or less, and Bi: more than 0% to 1.0000% or less
      [Element group E]: one kind or two or more kinds selected from a group consisting of Zr: more than 0% to 1.0000% or less, Ag: more than 0% to 1.0000% or less, and Li: more than 0% to 1.0000% or less
      [Element group F]: one kind or two or more kinds selected from a group consisting of La: more than 0% to 0.5000% or less, Ce: more than 0% to 0.5000% or less, and Y: more than 0% to 0.5000% or less
      [Element group G]: B: more than 0% to 0.5000% or less
(2) The welded joint according to (1), having a chemical composition containing the element group A.
(3) The welded joint according to (1), having a chemical composition containing the element group B.
(4) The welded joint according to (1), having a chemical composition containing the element group C.
(5) The welded joint according to (1), having a chemical composition containing the element group D.
(6) The welded joint according to (1), having a chemical composition containing the element group E.
(7) The welded joint according to (1), having a chemical composition containing the element group F.
(8) The welded joint according to (1), having a chemical composition containing the element group G.
(9) The welded joint according to any one of (1) to (8), wherein the plating layer contains Mg: 9.00 to 15.00 mass%, and contains Ca: 0.05 to 4.00 mass% as the element group A.
(10) The welded joint according to any one of (1) to (9), wherein when a cross section cut in the direction orthogonal to the extension direction is observed by an electron microscope regarding the region, an η-Zn phase is not contained in the plating layer.
(11) The welded joint according to any one of (1) to (10), wherein when a cross section cut in the direction orthogonal to the extension direction is observed by the electron microscope regarding the region in the range from the starting point to 100 µm, a Mg phase is further contained in at least a part of the plating layer.
(12) The welded joint according to any one of (1) to (11), wherein an average area ratio of the Mg-Zn metal structure is 30 to 80%.

### [Explanation of Codes]

1 welded joint
10 first steel sheet
20 second steel sheet
30 weld bead part
40 heat-affected zone
101 base iron
103 plating layer
T toe

## Claims

1. A welded joint comprising:
a first steel sheet and a second steel sheet connected to a weld bead part whose extension direction is set as a long side in plan view, wherein:
the first steel sheet and the second steel sheet each have a heat-affected zone located around the weld bead part, and a non-heat-affected zone not affected by heat due to welding;
at least either the first steel sheet or the second steel sheet has a base iron and a plating layer on the base iron in the non-heat-affected zone;
the plating layer is a plating layer having a chemical composition containing, by mass%,
Al: 30. 00 to 70.00%
Mg: 7.00 to 20.00%
Fe: 0.01 to 15.00%, and
selectively containing one kind or two or more kinds of elements selected from a group consisting of an element group A, an element group B, an element group C, an element group D, an element group E, an element group F, and an element group G described below, with the balance composed of Zn of 5.00 mass% or more and impurities; and
when viewed from a toe defined in JIS Z3001 (2018) toward a direction being orthogonal to the extension direction and separating from the toe, the toe, a region where the heat-affected zone or the base iron is exposed, and a region having the plating layer are configured in this order, and an average area ratio of an Fe-Al metal structure is 0 to 95%, an average area ratio of a Mg-Zn metal structure is 5 to 100%, and an average area ratio of an η-Zn phase is 3 area% or less in the plating layer when a cross section cut in a direction orthogonal to the extension direction is observed by a scanning electron microscope regarding a region, with an end portion of the plating layer closest to the toe set as a starting point, in a range from the starting point to 100 µm.
[Element group A]: one kind or two kinds selected from a group consisting of Si: more than 0% to 10.00% or less, and Ca: more than 0% to 4.00% or less
[Element group B]: one kind or two or more kinds selected from a group consisting of Sb: more than 0% to 0.5000% or less, Pb: more than 0% to 0.5000% or less, and Sr: more than 0% to 0.5000% or less
[Element group C]: one kind or two or more kinds selected from a group consisting of Cu: more than 0% to 1.0000% or less, Ti: more than 0% to 1.0000% or less, Cr: more than 0% to 1.0000% or less, Nb: more than 0% to 1.0000% or less, Ni: more than 0% to 1.0000% or less, Mn: more than 0% to 1.0000% or less, Mo: more than 0% to 1.0000% or less, Co: more than 0% to 1.0000% or less, and V: more than 0% to 1.0000% or less
[Element group D]: one kind or two or more kinds selected from a group consisting of Sn: more than 0% to 1.0000% or less, In: more than 0% to 1.0000% or less, and Bi: more than 0% to 1.0000% or less
[Element group E]: one kind or two or more kinds selected from a group consisting of Zr: more than 0% to 1.0000% or less, Ag: more than 0% to 1.0000% or less, and Li: more than 0% to 1.0000% or less
[Element group F]: one kind or two or more kinds selected from a group consisting of La: more than 0% to 0.5000% or less, Ce: more than 0% to 0.5000% or less, and Y: more than 0% to 0.5000% or less
[Element group G]: B: more than 0% to 0.5000% or less

2. The welded joint according to claim 1, having a chemical composition containing the element group A.

3. The welded joint according to claim 1, having a chemical composition containing the element group B.

4. The welded joint according to claim 1, having a chemical composition containing the element group C.

5. The welded joint according to claim 1, having a chemical composition containing the element group D.

6. The welded joint according to claim 1, having a chemical composition containing the element group E.

7. The welded joint according to claim 1, having a chemical composition containing the element group F.

8. The welded joint according to claim 1, having a chemical composition containing the element group G.

9. The welded joint according to any one of claims 1 to 8, wherein the plating layer contains Mg: 9.00 to 15.00 mass%, and contains Ca: 0.05 to 4.00 mass% as the element group A.

10. The welded joint according to any one of claims 1 to 8, wherein when a cross section cut in the direction orthogonal to the extension direction is observed by the scanning electron microscope regarding the region in the range from the starting point to 100 µm, an η-Zn phase is not contained in the plating layer.

11. The welded joint according to claim 9, wherein when a cross section cut in the direction orthogonal to the extension direction is observed by the scanning electron microscope regarding the region in the range from the starting point to 100 µm, an η-Zn phase is not contained in the plating layer.

12. The welded joint according to any one of claims 1 to 8, wherein when a cross section cut in the direction orthogonal to the extension direction is observed by the scanning electron microscope regarding the region in the range from the starting point to 100 µm, a Mg phase is further contained in at least a part of the plating layer.

13. The welded joint according to claim 9, wherein when a cross section cut in the direction orthogonal to the extension direction is observed by the scanning electron microscope regarding the region in the range from the starting point to 100 µm, a Mg phase is further contained in at least a part of the plating layer.

14. The welded joint according to claim 10, wherein when a cross section cut in the direction orthogonal to the extension direction is observed by the scanning electron microscope regarding the region in the range from the starting point to 100 µm, a Mg phase is further contained in at least a part of the plating layer.

15. The welded joint according to claim 11, wherein when a cross section cut in the direction orthogonal to the extension direction is observed by the scanning electron microscope regarding the region in the range from the starting point to 100 µm, a Mg phase is further contained in at least a part of the plating layer.

16. The welded joint according to claim 1, wherein an average area ratio of the Mg-Zn metal structure is 30 to 80%.
